# EUROPEAN PATENT SPECIFICATION

(11) **EP 3 174 328 B1**
(45) Date of publication and mention of the grant of the patent: **29.08.2018**
(21) Application number: 15196008.5
(22) Date of filing: 24.11.2015
(51) Int. Cl.: H04W 4/021, H04W 4/02, H04W 16/18, H04W 8/24, H04W 64/00, H04B 17/318

(54) **SYSTEM AND METHOD FOR RADIO SIGNAL COVERAGE MAPPING**
SYSTEM UND VERFAHREN ZUR FUNKSIGNALABDECKUNGSABBILDUNG
SYSTÈME ET PROCÉDÉ DE MAPPAGE DE COUVERTURE DE SIGNAL RADIO

(43) Date of publication of application: 31.05.2017
(73) Proprietor: Advanced Digital Broadcast S.A., 1292 Geneva (CH)
(72) Inventor: Cichonski, Dariusz, 65-119 Zielona Gora (PL)
(74) Representative: Blonski, Pawel

(56) References cited:
- US-A1- 2005 245 275
- US-A1- 2013 178 226
- US-A1- 2015 179 088
- US-A1- 2015 327 132

## Description

### TECHNICAL FIELD

The present invention relates to a system and method for radio signal coverage mapping. In particular the present invention relates to determining radio coverage provided by a telecommunications system to a user of a mobile device.

### BACKGROUND OF THE INVENTION

Prior art defines GSM signal coverage mapping, where a network operator gathers real time data as well as estimates coverage based on receiver's location and positioning of BTS units.

These maps, by their nature cannot be precise as the operator cannot visit every location outside and inside of any buildings. Further, these maps do not take into account kinds of receivers, which vary from unit model to unit model with respect reception capabilities (e.g. different antennas, signal processing circuits quality/capability). Further, such maps do not take into account altitude of the receiver, for example different floors of a building.

A publication of US 8538428 B2, discloses an arrangement for determining radio signal coverage. In case of a GSM or UMTS mobile device, if the device is in the idle mode (step A) and if a paging operation is not scheduled (step B), the mobile device records and stores on the mobile device a characteristic of the radio coverage provided when the mobile device is at each of a plurality of locations visited by the user of the mobile device (step C). The arrangement also enables retrieval of the recorded and stored characteristic so that radio coverage provided to the device for the user at the locations can be evaluated. If the telecommunications system includes a plurality of networks, the mobile device will record and store the characteristic for each of the plurality of networks. The arrangement then enables the radio coverage provided by the respective networks to be evaluated, and an informed choice as to the best network for that particular user can be made.

This application only addresses the problem of gathering coverage information, but does not consider sufficient number of elements influencing received signal quality and strength. Further, '428 focuses on suggesting the best network instead of suggesting a better positioning of a mobile device so that the best signal for a given, already selected network is obtained.

Publication of US7,392,017 discloses an arrangement for assessing wireless network quality. When a user of a mobile device makes a request for service from an information service provider this request is sent to the information service provider including information about the device and its location (for example using GPS). The arrangement determines network quality by measuring the number of attempts that are required to successfully transmit data between the mobile device and the information service provider. The system does not measure network quality at the mobile device.

Another publication of US 20050245275 A1 entitled "Method and system or determining the location of an improved carrier signal" discloses a method for determining the location of an improved carrier signal emitted by a base station relative to the position of a communication device, the carrier signal having a signal strength, and the communication device having access to a digital map. A determination is made to determine the signal strength of the carrier signal at the current location of the communication device; locating an adjacent location on the digital map and determining the signal strength at the adjacent location; and in response to a greater signal strength being determined at the adjacent location, displaying the direction of the position of the adjacent location on the communication device.

Yest another prior art of US 20150327132 A1 entitled "Method and apparatus for providing wireless connection quality guidance" discloses a user device that determines a set of connection information at a current location of the device. The current connection information set includes one or more of current location information, current wireless channel information, current radio access technology information, and a current wireless channel quality metric. The device adds the current connection information set to a database of connection information that stores a plurality of sets of alternate connection information. Each alternate connection information set includes one or more of alternate location information, alternate wireless channel information, alternate radio access technology information, and an alternate wireless channel quality metric. The device determines whether to output through a user interface of the device, an indication of an alternate location from the database of connection information based on the current connection information set and at least one of the alternate connection information sets.

It would be advantageous to present an improved system and method for radio signal coverage mapping.

The aim of the development of the present invention is an improved and easy to use system and method for signal coverage mapping.

### SUMMARY AND OBJECTS OF THE PRESENT INVENTION

An object of the present invention is a method for radio signal coverage mapping, the method comprising the steps of: determining geolocation of a mobile device receiving a radio signal; determining proximity of the mobile device to other objects; determining orientation of the mobile device in 3D space; determining the radio signal reception parameters; storing at least two records comprising the gathered information on geolocation and proximity and orientation and the radio signal reception parameters wherein at least one of the geolocation, proximity, orientation differs between the two records; receiving, by the mobile device, a communication request, the communication using the radio signal, at a location determined by the first record; determining whether signal reception parameters result in an improved quality of service at the second location, defined by the second record, than at the location determined by the first record; and navigating, by the mobile device, a user of the mobile device to the second location and informing when the current parameters of geolocation and proximity and orientation, of the mobile device, match the parameters stored in the second record wherein said determining proximity includes proximity to other devices by the mobile device's front and/or back side.

Preferably, said storing at least two records is executed when the mobile device is present in a limited the area of signal monitoring, the area being limited by specifying a location's perimeter definition from a given reference point. Preferably, said signal reception parameters comprise signal strength and quality of service parameters.

Preferably, said signal reception parameters comprise measurement accuracy. Preferably, determining geolocation is executed using a geolocation system combined with inertial navigation.

Preferably, said determining geolocation of a mobile device takes into account altitude.

Preferably, a threshold is applied with respect to the altitude difference that denotes a need to create a different radio coverage map.

Preferably, said radio signal is selected from a group comprising GPS, FM, Wi-Fi, GSM, UMTS, LTE.

Preferably, said at least two records form a radio signal coverage map associated with a unique identifier of the mobile device or a make and model of the mobile device.

Preferably, said radio signal coverage map is transmitted, by the mobile device, to a central repository of radio signal coverage maps, from which other devices may download the maps.

Preferably, said radio signal coverage map comprises information on average signal strength, in the area of the map and /or average quality of service.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

A further object of the present invention is a system for radio signal coverage mapping in a mobile device, the system comprising: a connectivity module configured to receive a radio signal; a geolocation unit; an orientation detection unit; a proximity detection sensor; a processor configured to execute all steps of the method according to the present invention.

### BRIEF DESCRIPTION OF THE DRAWINGS

These and other objects of the invention presented herein, are accomplished by providing a system and method for signal coverage mapping. Further details and features of the present invention, its nature and various advantages will become more apparent from the following detailed description of the preferred embodiments shown in a drawing, in which:
Fig. 1 presents examples of radio signal coverage in a location;
Fig. 2 presents a typical setup of a receiver device;
Fig. 3 presents a sensors unit of a receiver device;
Fig. 4 presents the communication module of a receiver device;
Fig. 5 presents details of the data stored in the memory of the receiver device;
Fig. 6A presents details of the location and positioning parameters;
Fig. 6B presents more details of the signal strength and QoS parameters module;
Fig. 6C shows details of time parameters identifying a time of signal measurement;
Fig. 6D depicts a database of radio signals coverage maps;
Fig. 7 presents a configuration setup of a single radio signal coverage map;
Fig. 8 depicts details of configuration of a map's reference point;
Fig. 9A presents measurement of signal in two locations, taking into account spatial orientation of a receiver;
Fig. 9B shows map's database record;
Fig. 9C presents a view of a building where there are four mobile devices located in a building;
Figs. 10A-C show a method for radio signal monitoring according to the present invention;
Fig. 10D shows a high level organization of the process shown in Figs. 10A-C;
Fig. 11A-C present radio signal coverage map retrieval;
Fig. 12 shows a process of sharing radio signal coverage maps at a request of another mobile device;
Fig. 13 presents a request of executing a service with predefined signal parameters; and
Fig. 14A-C present an example of a graphical user interface using the method according to the present invention.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

According to the present invention the radio signal may be a signal present in a wireless telecommunication system or other general purpose radio signal such as GPS, FM, Wi-Fi or similar.

The telecommunications system may be a cellular telecommunications system such as a 2G (GSM), 3G (UMTS) or 4G (LTE) telecommunications system. Such systems have been presented in more details in US 8538428 B2. Thus, a signal source may be a BTS, an eNodeB, a NodeB or the like.

Mobile devices, such as smartphones, internal antennas and their reception capabilities are influenced by device orientation as well as proximity to other objects. Prior art methods have not taken into account these factors.

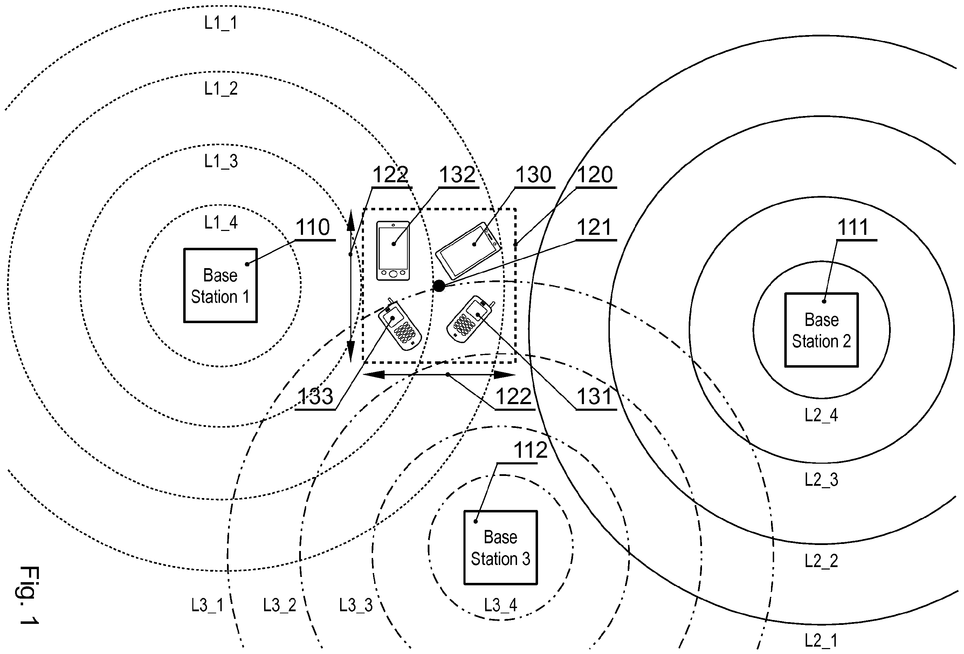

Fig. 1 presents examples of radio signal coverage in a location. This is a theoretical setup, where there are not any objects attenuating and/or reflecting the signal. Therefore, the source signals lose their strength gradually thereby achieving a coverage having a shape of a perfect circle. Fig. 1 presents a location (120) having a shape of a square of a given length. It is clear that other shapes of locations may be monitored in terms of signal strength and quality (e.g. a circle, a rectangle, an arbitrary polygon etc.)

At the location (120) there may be present at least one receiver device (130, 131, 132, 133) such as a smartphone, which receives signals from at least one source (110, 111, 112). In some instances more than one source of signal is available, while in other cases only one signal source is present at a given location.

Each location (120) may comprise a plurality of smallest location areas wherein a smallest location area is the smallest distinct area that is non-overlapping with other areas. A size of such smallest location area may be defined by a user and typically will depend on amount of data that a user wishes to gather as well as on geolocation precision of a geolocation system used (e.g. GSM triangulation, GPS, inertial navigation). The position may be measured using any available geolocation system combined with inertial navigation indoors where GPS signal may be weak thus resulting in imprecise geolocation. The inertial navigation uses a computer, motion sensors (accelerometers) and rotation sensors (gyroscopes) to continuously calculate a position, orientation, and velocity (direction and speed of movement) of a moving object without the need for external references.

As can be seen in Fig. 1, each base station (110, 111, 112) emits a signal that decreases its strength with distance from the emitter. Each signal has been presented in four zones L1_4, L1_3, L1_2 and L1_1 wherein the L1_4 zone is the strongest signal of the base station 1 while L1_1 zone is the weakest signal of the base station 1. The other two base stations are depicted in the same manner showing that one receiver device (130, 131, 132, 133) may be in a location covered by more than one base station while a spatial movement of the receiver device may result in increased signal strength/quality.

A conscious movement of the receiver within the location (120) may lead to increase in the received signal strength and/or quality.

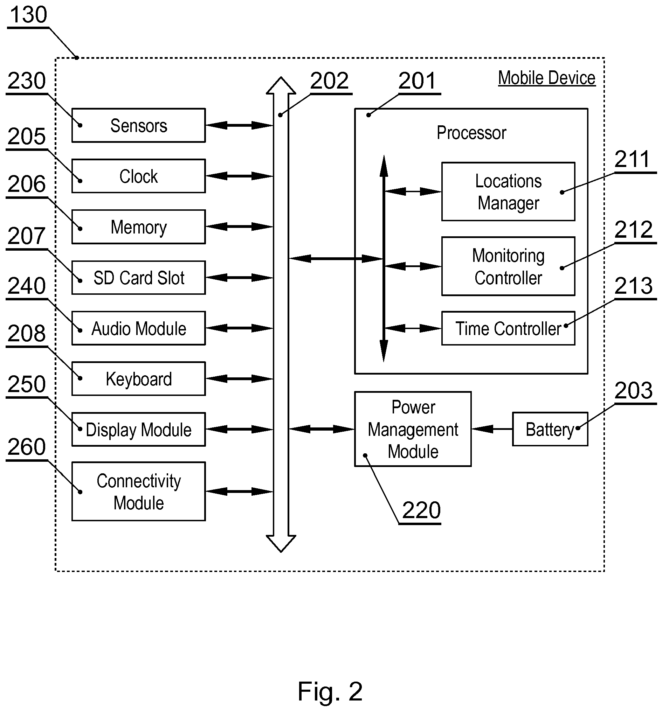

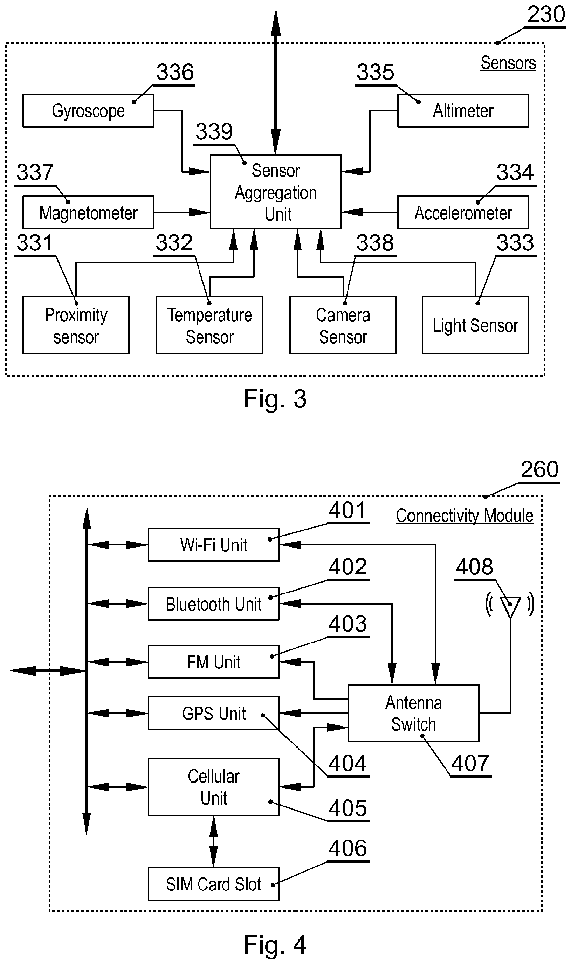

Fig. 2 presents a typical setup of a receiver device (130). The device (130) comprises a connectivity module (260) responsible for receiving and/or transmitting data in a wireless fashion. A signal received by the connectivity module (260) is monitored according to the present invention. Other typical modules include a memory (206) for storing data (including data records forming a database of signal coverage map) as well as software executed by the receiver, a clock module (205) configured to provide clock reference for other modules of the system, and a sensors module (230) encompassing at least one sensor as will be presented with reference to Fig. 3.

Other, typical, but optional modules of the receiver are a display module (250) configured to display user interface to a user, a keyboard (208) operating as an input interface for the receiver, an audio module (240) configured to generate audible signals, an external memory slot such as an SD card slot (207) configured to receive and operate an external memory unit.

A suitable bidirectional data bus (202) may be employed in order to facilitate communication between modules and the processor (201). The processor (201) comprises a locations manager (211) monitoring geolocation data and based on these data requests signals monitoring and/or retrieval of coverage maps from a local or external database. The signals monitoring is executed by a monitoring controller (212) configured to monitor signals received by the connectivity module (260). Typically, signal strength (e.g. signal to noise ratio, signal strength in dB) and quality will be monitored wherein signal quality may be relative to number of errors corrected in data and/or number of lost packets and/or available bitrate and/or similar.

A mobile device may also comprise a power management module (220) cooperating with a battery (203).

Fig. 3 presents the sensors (230) unit of a receiver device. The management of sensors may be aggregated by a sensors aggregation unit (339), which serves as a bridge between each of the set of sensors and a client requesting data from respective sensors. The sensors may be any one of or any subgroup of the following sensors: a proximity sensor (331), a temperature sensor (332), a light intensity sensor (333), an accelerometer (334), an altimeter (335), a gyroscope (336), a magnetometer (336), and a camera sensor (338). The aforementioned sensors operate according to principles known in the prior art and are frequently available in smartphones, especially high-end smartphones.

Fig. 4 presents the communication module (260) of a receiver device. The communication means may be any one of or any subgroup of the following: Wi-Fi (401), Bluetooth (402), FM (403), GPS (404), cellular communication unit (405) (such as GSM, 3G, 4G and similar) communicating with a sim card slot (406), or similar. The different communication means may be managed by an antenna switch (407) connected to an antenna module (408) that may comprise one or more types of antennas.

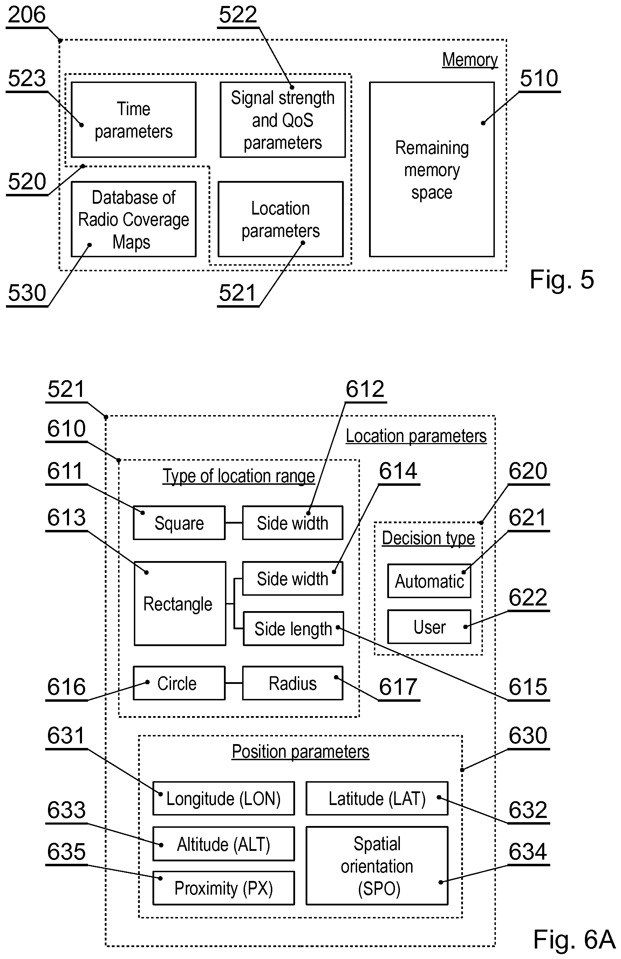

Fig. 5 presents more details of the data stored in the memory (206) of the receiver device. A database of radio signal coverage maps (530) may be present in the memory wherein the maps provide information on radio signal coverage in areas visited currently or frequently by a user of the mobile device. The map provides, for each location, information on signal strength/quality from a given source. The signal strength/quality data may be averaged from multiple measurements, presented per device model or per device unit.

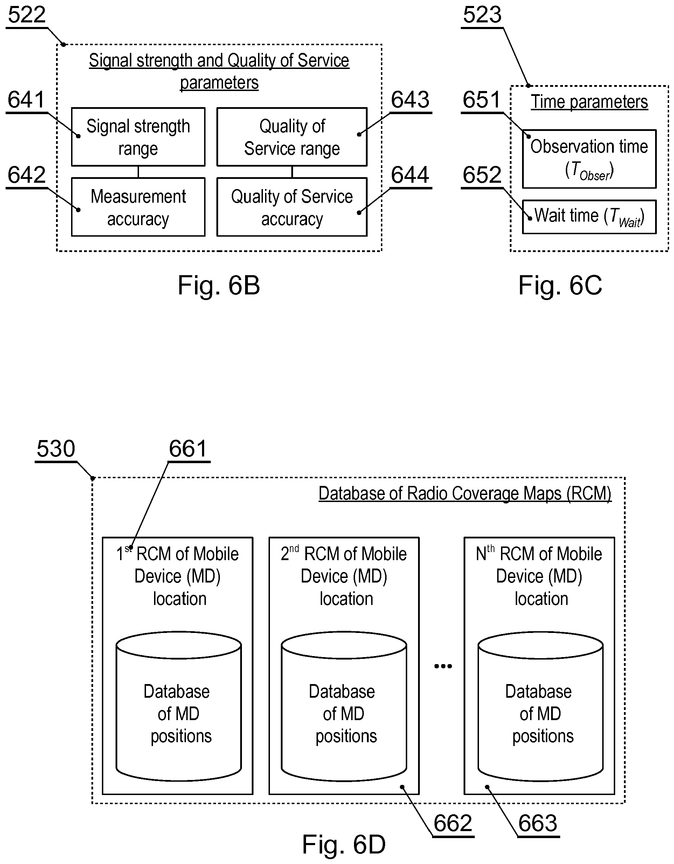

The radio signal coverage maps (530) are formulated according to map configuration parameters (520) comprising time parameters (523) identifying a time of signal measurement, signal strength and QoS parameters (522) that are to be obeyed with respect to a particular signal source, and location parameters (521) denoting different data related to location and positioning of a receiver, that are to be stored, as presented in more details in Fig. 6B. Further, the memory (206) comprises additional space (510) for storing any configuration data and required software.

Fig. 6A presents details of the location and positioning parameters (521). The parameters (620) refer to decision type of a user regarding the signal monitoring process. The monitoring may start automatically (621) or upon request of a user (622).

Further, the location and positioning parameters (521) comprise position parameters in 3D space of a given signal map. The stored position parameters include latitude (632), longitude (631), altitude (633) wherein latitude (632) and longitude (631) are mandatory to define an area covered by a map.

Additionally, the position parameters (630) comprise proximity (635) information as well as spatial orientation information (634). A user may specify whether a given map data shall include proximity and spatial orientation data collected by the device while a radio signal is measured. The spatial orientation may include tilt and rotation about any axis in 3D space.

Mobile devices typically comprise one or more proximity sensors, readings of which may be taken into account while measuring signal strength/quality. For example, one measurement of signal strength/quality may be stored while the mobile device stands in a docking station (lack of proximity to other devices by its front and/or back side), another measurement may be stored when the same device is held such that the back is covered (e.g. a speaker phone mode) and yet another measurement may be stored when the same device is held such that the front is covered (e.g. user holds a smartphone in proximity to his ear). Due to different coverage of the mobile device different readings of signal strength/quality may occur.

The spatial orientation information (634) refers to orientation of the mobile device in 3D space. Frequently, different readings of signal strength/quality may occur with different spatial orientation of the same device. This may be a result of applied directional antennas during a given type of communication. Therefore, such parameters are also stored, while measuring radio signal coverage.

As an option, the location and positioning parameters (521) may comprise location's perimeter definition (610). In certain cases, it may be advantageous to limit the area of signal monitoring. The area may be limited by providing a definition of a perimeter around a certain point in space. The perimeter may be circular (616, 617), square (611, 612), rectangular (613, 614, 615) or have any other shape both in 2D as well as 3D.

Fig. 6B presents more details of the signal strength and QoS parameters (522) module. These parameters may define a monitored signal strength range (641). This may limit the amount of data stored in a coverage map since all signal strength values below the range may be denoted as weak, values within the range may be denoted as moderate while values above the range may be denoted as good signal. Additionally, measurement accuracy (642) may be associated with a map since different meters may measure signal with different accuracy. By specifying accuracy of the meter one may later select a coverage map created using a more accurate metering.

Similar range or ranges may be defined with respect to the quality of service parameter(s) (643) as well as measurement accuracy (644) of such parameters. The accuracy parameters may be predefined for a given type of a device.

Fig. 6C shows details of time parameters (523) identifying a time of signal measurement. An observation time is a total time, during which a signal is to be monitored at a single location while a wait time (652) is a time after which a monitoring of radio signal(s) will start thus generating a new map or modifying an existing map. The wait time may also refer to a total time spend by a user (carrying a mobile device) in a given perimeter. This allows to distinguish between temporary locations and locations of interest to a user.

Fig. 6D depicts a database of radio signals coverage maps (530). There may be present a plurality of radio coverage maps (RCM) of covering non-overlapping or overlapping areas (661, 662, 663).

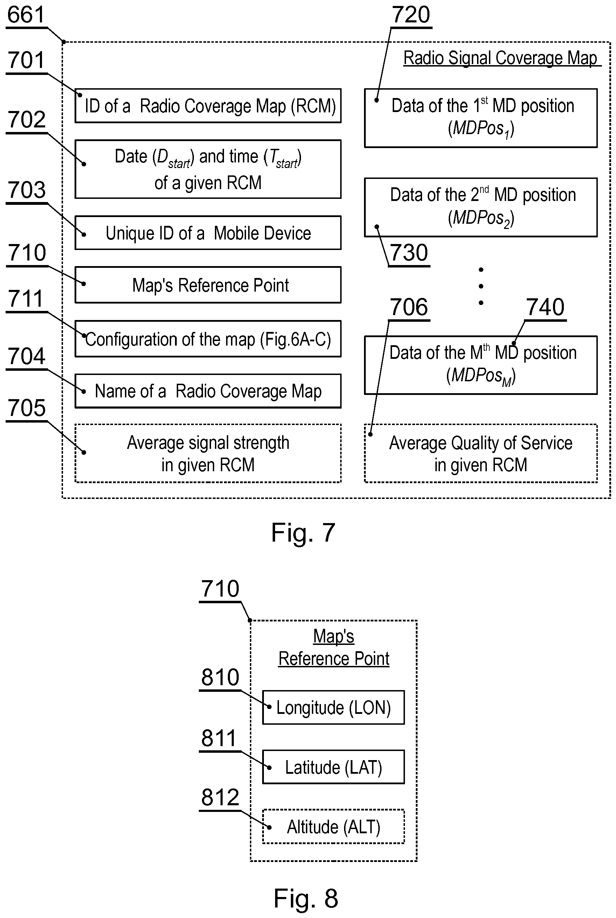

Fig. 7 presents a configuration setup of a single radio signal coverage map (661). The map comprises an identifier of the Radio Coverage Map (701) as well as optionally its name (704). Further the configuration of the map comprises date and time of creation of the map (702) as well as optionally its last update time.

The radio signal coverage map (661) may further be associated with a unique identifier of a mobile device (703) or at least be associated with a make and model of the mobile device so that other devices could use already created maps for given devices. To this end a radio signal coverage map (661) may be transmitted by a mobile device to a central repository of maps from which other devices may download the maps whenever appropriate.

Optionally, a radio signal coverage map (661) may comprise, continuously updated, average signal strength, in the area of the map (705). This may serve as a quick reference value when high precision is not crucial and rough information is sufficient for a device requesting such information. Similarly, average quality of service in the given map (706) may be provided.

Additionally, a radio coverage map (661) comprises a configuration according to Fig. 6A-C (711), wherein a user selects configuration options or applies default ones. For example, the user selects a shape of the area of the map (610) and/or parameters of positions to be stored (630) in the map's database records (720, 730, and 740). In order to define an area of the map a reference point (710) needs to be provided that will typically serve as a central point of the map.

Fig. 8 depicts details of configuration of a map's reference point (710) comprising longitude information (810), latitude information (811) and optionally altitude information (812).

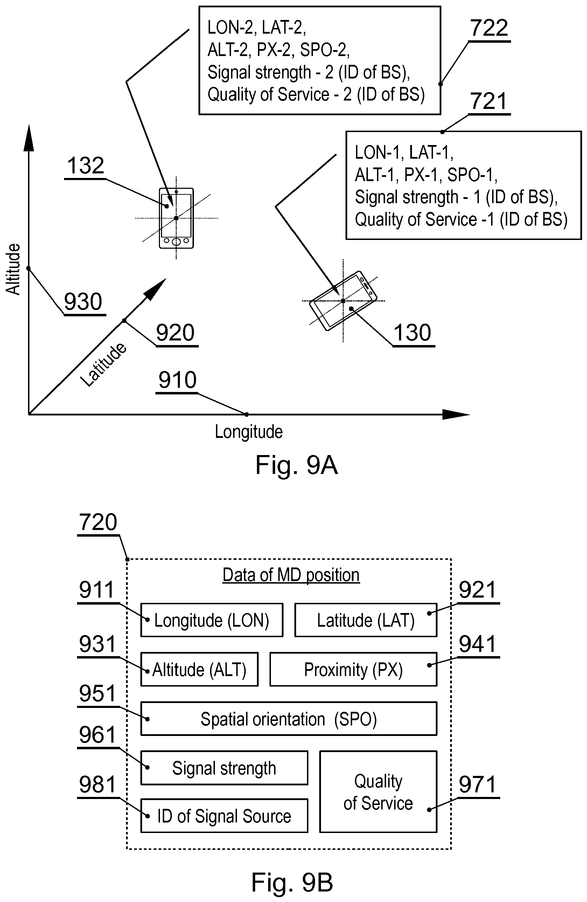

Fig. 9A presents measurement of signal in two locations, taking into account spatial orientation of a receiver. In this case a position of the receiving device (130, 132) is defined with longitude information (910), latitude information (920) and altitude information (930). On top of that, spatial orientation of the receiver is taken into account when measuring a radio signal parameters.

Additionally, proximity of the receiver device to other objects is taken into account when measuring a radio signal parameters. In order to determine location, proximity and spatial orientation of the receiver, the sensors presented in the foregoing specification may be used.

A measurement record (721, 722) is supplemented with signal strength and quality of service information with respect to an identified signal source. An identified signal source may take a form of an identifier of a GSM BTS.

The aforementioned data may subsequently form map's database records (720, 730, and 740) as shown in Fig. 9B. Each map's database record, in this embodiment, comprises longitude information (911), latitude information (921), altitude information (931), spatial orientation of the receiver (951), proximity of the receiver device to other objects (941). Proximity information may further be specified more precisely by defining proximity to other objects with a back or front side and/or specifying proximity distance, e.g. in centimeters. Alternatively, proximity information may specify different device states such as NOT_COVERED, FRONT_COVERED, BACK_COVERED.

The map's database records (720, 730, and 740) also comprise signal strength (961) and quality (971) wherein the measured signal is received from a given source (981). Naturally, when proximity and/or spatial orientation in 3D space changes, the measurements may be re-executed and saved as separate record(s).

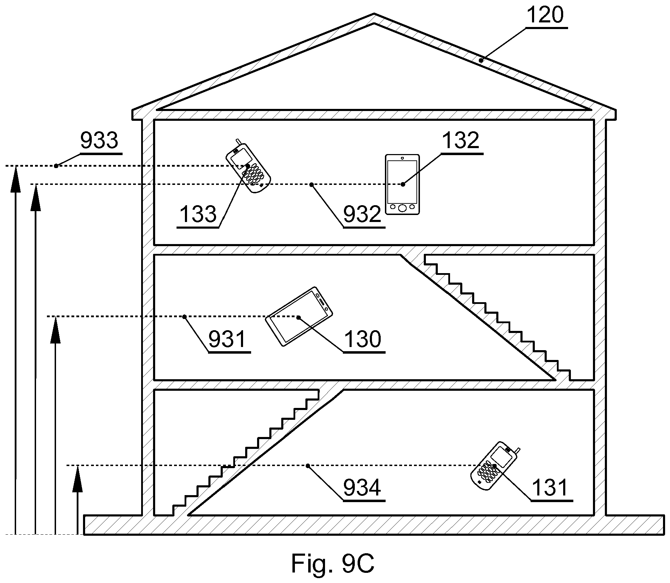

Fig. 9C presents a view of a building, where there are four mobile devices (130, 131, 132, 133) located in a building (120). Since the devices are located on 3 different floors (different altitudes) it is advantageous to create different radio signal coverage maps for different floors even if the same radio signal is concerned.

Device (131) is present on a first altitude (934) and may record or update a first radio signal coverage map. Device (130) is present on a second altitude (931) and may record or update a second radio signal coverage map. The devices (132, 133) are present on a similar third altitude (932, 933) and may record or update a third radio signal coverage map. A threshold may be applied with respect to the altitude difference that denotes a need to create a different radio coverage map.

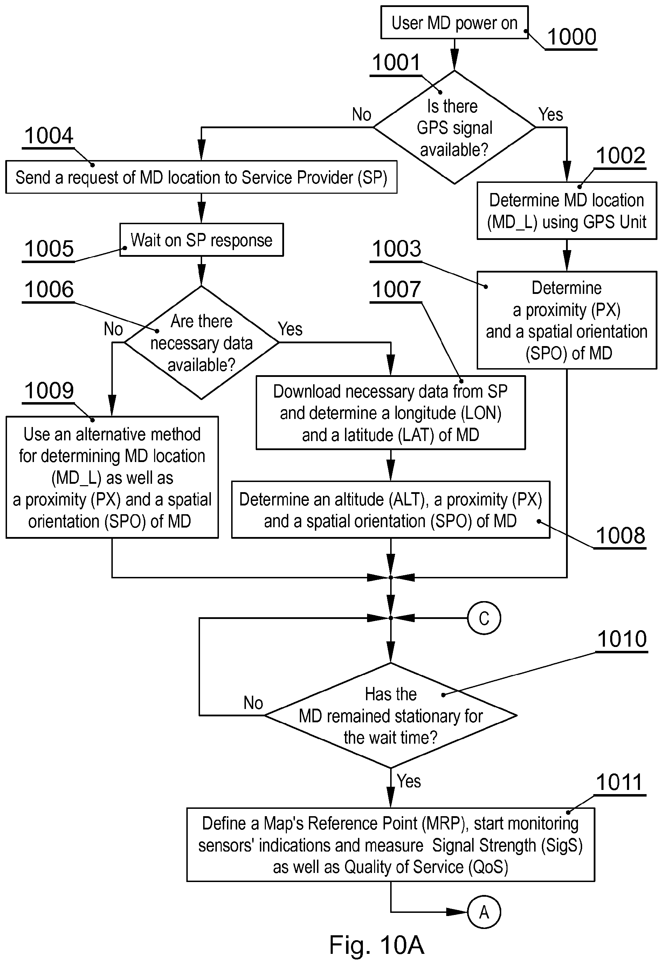

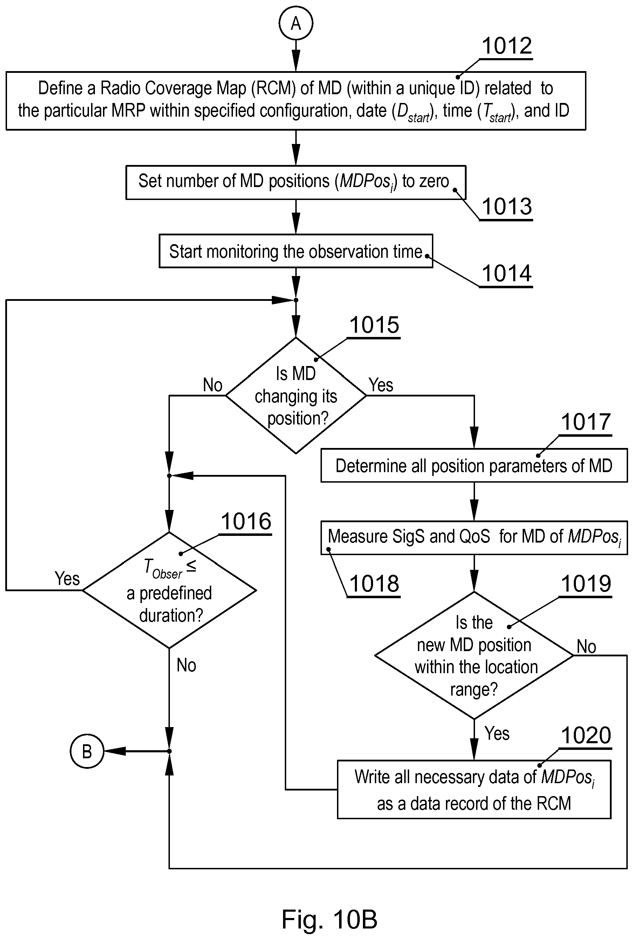

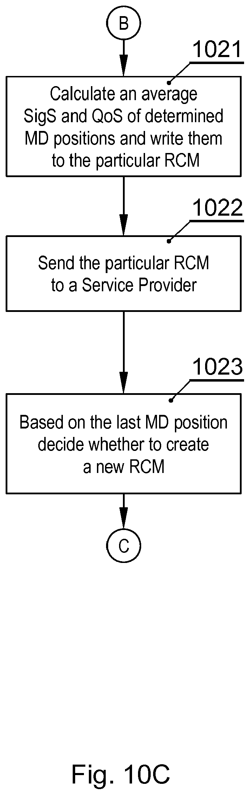

Figs. 10A-C show a method for radio signal monitoring according to the present invention. At step (1000) a user's mobile device (MD) is powered on. Further, at step (1001) there is checked whether a geolocation (GPS) information is available. In case it is available, at step (1002) there is determined a mobile device's location (MD_L) using the geolocation (GPS) unit and subsequently, at step (1003), there is determined a proximity (PX) of the mobile device to objects and a spatial orientation (SPO) of the mobile device.

At step (1010) the mobile device determines that a radio coverage map is to be created or updated. Thus, there is defined a Map's Reference Point (MRP) and the system starts monitoring sensors' indications and measure Signal Strength (SigS) as well as Quality of Service (QoS).

In case a geolocation (GPS) information is not available, steps (1004-1009) may be taken to obtain the geolocation by alternative methods. At step (1004) a mobile device may send a request for its location to a Service Provider (SP). In some cases a service provider may be aware of receiver's location and communicate it to the receiver (1005, 1006). In case the geolocation is not available from the service provider (1006) the mobile device may use an alternative method for determining MD's location (MD_L) since proximity (PX) and a spatial orientation (SPO) of the MD are detected internally by the mobile device (1008). Such methods may include inertial navigation or other geolocation by other systems.

When geolocation and proximity and orientation in 3D space of the mobile device is known, at step (1010) it is checked whether the mobile device has remained stationary for the wait time (i.e. the map creation criterion (652)). The fact of having a stationary position may be compared to position change threshold so that for example measurement error is taken into account. In case the wait time condition is met the procedure moves to step (1011) where there is defined a Map's Reference Point (MRP) and the system starts monitoring its sensors' indications and measures Signal Strength (SigS) as well as Quality of Service (QoS).

In response to that, at step (1012) there is defined a Radio Coverage Map (RCM) of MD (within a unique ID) related to the particular MRP within specified configuration, date (Dₛₜₐᵣₜ), time (Tₛₜₐᵣₜ), and ID. The new RCM has the number of MD positions (MDPosᵢ) set to zero (1013) i.e. the RCM does not have any associated signal measurements records in the database.

After that, at step (1014), the method starts monitoring the observation time and the method remains in a loop until the mobile device exits the monitored location range or the observation time has passed. During this loop it is checked whether the mobile device changed its position (1015) and in case it has not the observation time is checked (1016). If the observation time for a single location has passed, the loop exits to point (B) and otherwise the method returns to step (1015).

When the mobile device has changed its location, at step (1017) there are determined all position parameters of MD including its orientation in 3D and proximity to other objects. Subsequently, at step (1018), there is measured SigS and QoS. Further, at step (1019) it is checked whether the new MD position falls within the location range of the current radio signal coverage map as defined in the map's configuration. In case it does not, the loop exits to point (B) and otherwise the method returns to step (1020) where the system writes all necessary data of MDPosᵢ as a data record of the radio signal coverage map RCM. Naturally, the index of records i increases so that a new record may be saved with a new index.

When a new record of a radio signal coverage map has been stored, at step (1021) the system may calculate an average SigS and QoS of determined MD positions and write them to the particular RCM.

Further, at step (1022) the system may send the particular RCM to a Service Provider. A service provider collects RCMs, may process them, reconfigure and share with other mobile devices.

Lastly, at step (1023) the system decides, based on the last mobile device position, whether to create a new RCM. This will take place when the current position of the mobile device falls outside of the defined map. Alternatively, when such current position of the mobile device is covered by an existing map, the existing map may be opened and updated.

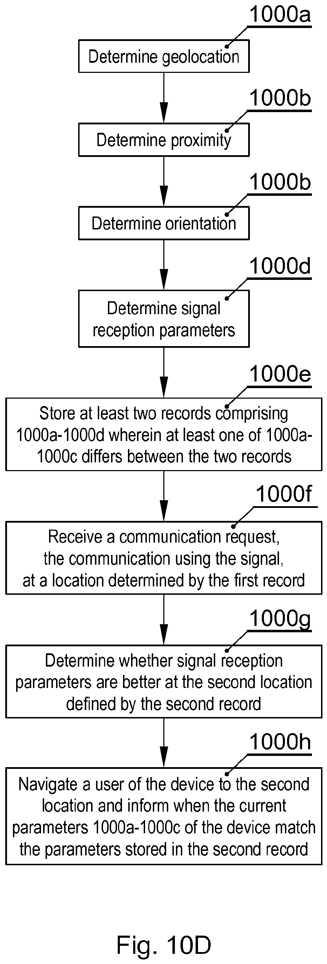

Fig. 10D shows a high level organization of the process shown in Figs. 10A-C. The process starts from determining geolocation (1000a) of a mobile device receiving a radio signal. Subsequently there is determined proximity (1000b) of the mobile device to other objects (e.g. covered back and/or covered front). Further, there is determined orientation (1000c) of the mobile device in 3D space. In terms of parameters, the last step (1000d) is to determine signal reception parameters as previously described. Next, at step (1000e) there are stored at least two records comprising the information gathered at step (1000a-1000d) wherein at least one of (1000a-1000c) differs between the two records. Subsequently, the mobile device receives a communication request (1000e), the communication using the signal, at a location determined by the first record and determines (1000f) whether signal reception parameters are better at the second location defined by the second record. Lastly, at step (1000g) the mobile device navigates a user of the device to the second location and informs when the current parameters, as measured in steps (1000a-1000c), of the mobile device match the parameters stored in the second record. This achieves communication at the best available parameters of the signal.

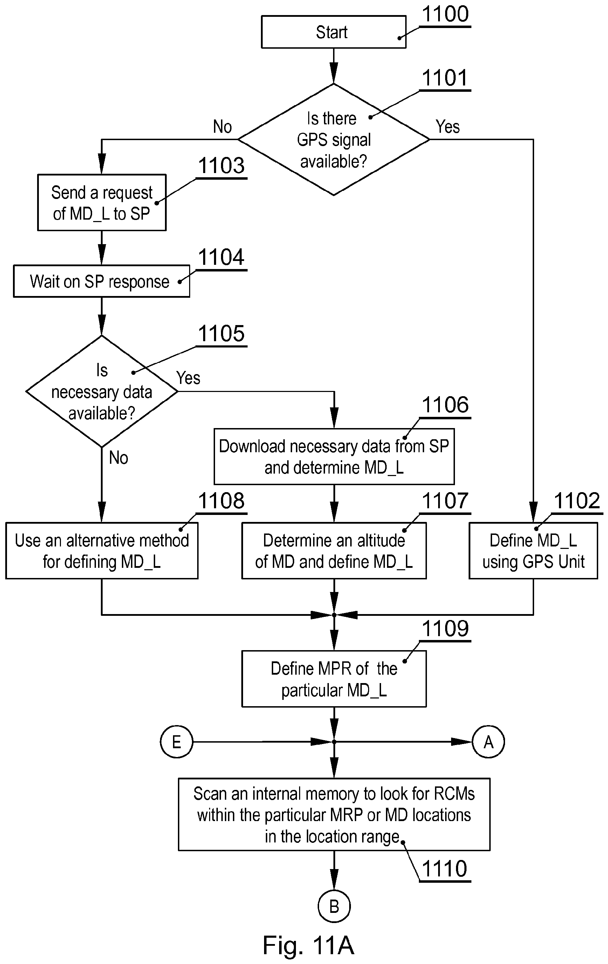

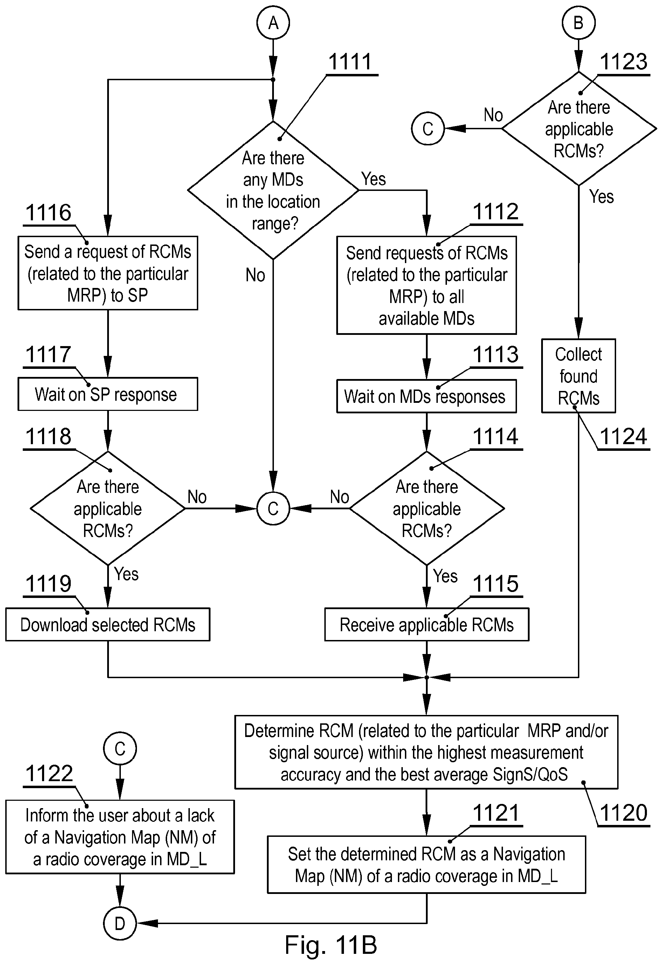

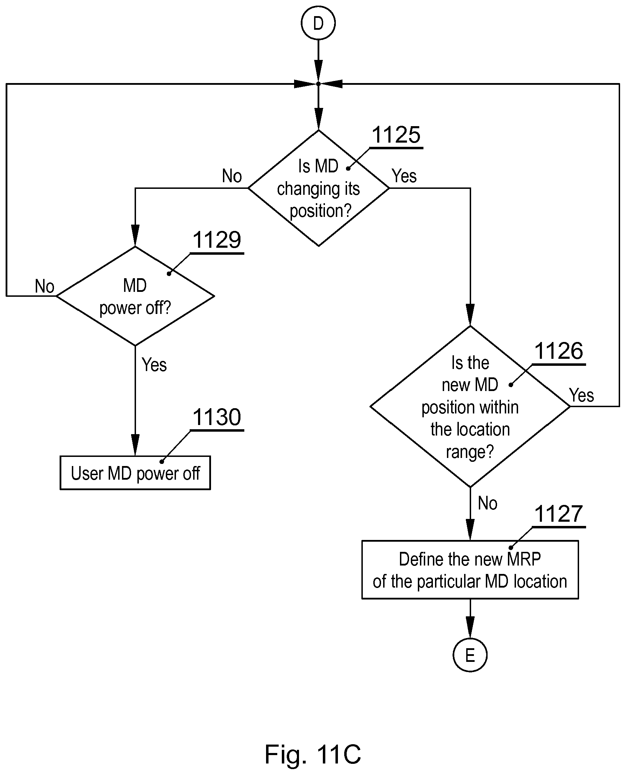

Fig. 11A-C present radio signal coverage map retrieval. When powered on (1100) a mobile device establishes its positon via a GPS signal (1101, 1002) or via alternative sources (1103, 1108) similarly as in Fig. 10A. As a result a map reference point (1109) is defined for a location of the mobile device. For this reference point or a location in proximity, there is scanned an internal memory (1110, 1123, 1124) for radio signal coverage maps in proximity to this reference point.

At the same time, the system may scan for other mobile devices in the vicinity (1111) in order to request (1112-1115) radio signal coverage maps, for a given reference point, from these devices.

Further, the system may request (1116-1119) radio signal coverage maps, for a given reference point, from one or more service providers (e.g. GSM). All the available radio signal coverage maps are collected by the mobile device prior to step (1120) where there is determined a radio signal coverage map (related to the particular reference point and/or signal source) with the highest measurement accuracy and the best average SignS/QoS, which is set as the currently used map (1121).

In case the mobile device changes position (1125). In case the new position does not fall (1126) within the current radio signal coverage map, a new map (1127) may be selected.

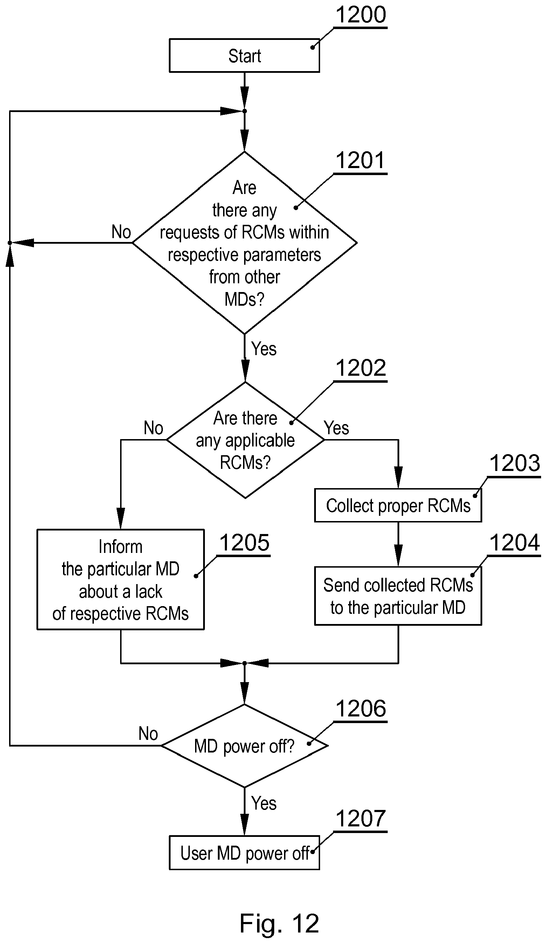

Fig. 12 shows a process of sharing radio signal coverage maps at a request (1201) of another mobile device. In case a mobile device has a map matching requested parameters (1202) it will share the applicable map(s) (1203-1204). Otherwise it will notify the requester accordingly (1205) and return to normal operation (1206-1207).

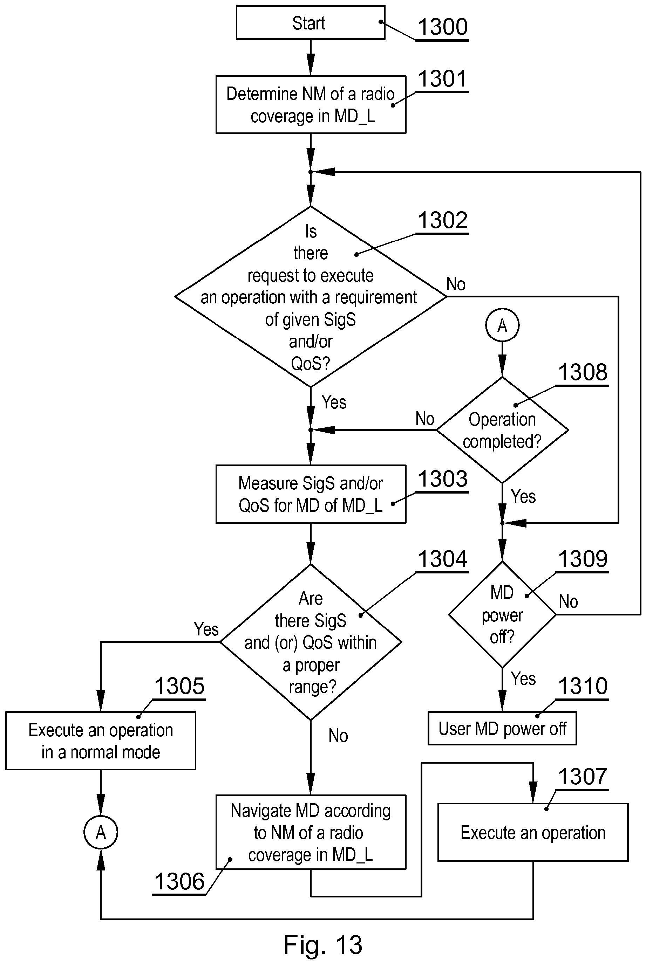

Fig. 13 presents a request of executing a service with predefined signal parameters. The process starts from determining (1301) a navigation map of a radio signal coverage in a location of the mobile device. In case a signal at a current location is not sufficient (1302-1304) the system may navigate (1306) to a location where sufficient signal is available in order to execute (1307) the requested operation.

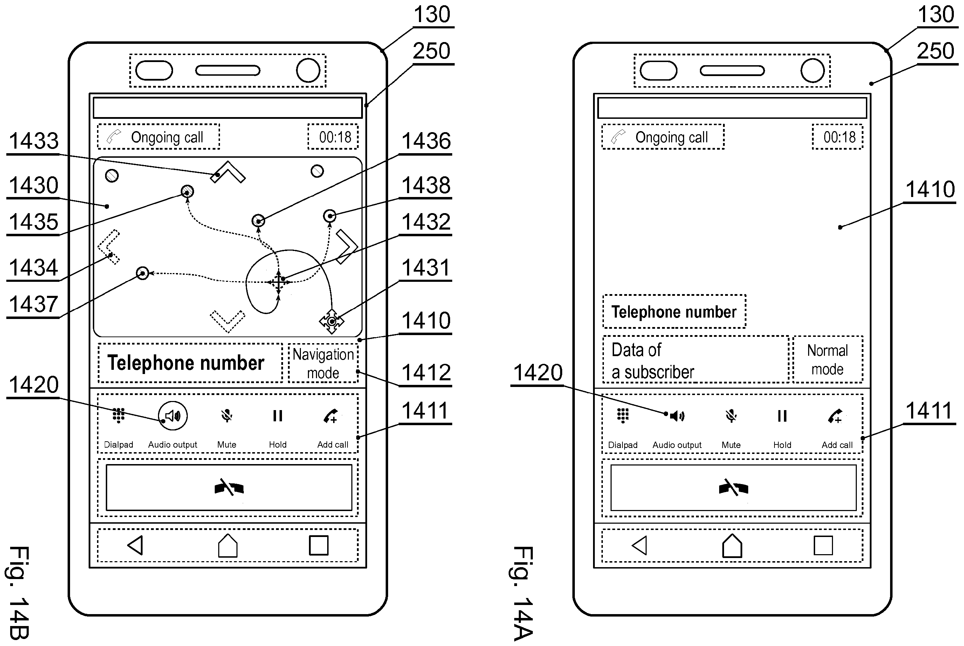

Fig. 14A-C present an example of a graphical user interface using the method according to the present invention. In Fig. 14A, a mobile device (130) displays a user interface (1410) presenting on ongoing telephone communication. During such a communication a user may experience weak signal, transmission errors, noise etc. In order to easily switch to a navigational mode, a user may select a speakerphone option (1420) of available options (1411). Once in that mode, a user may switch to navigation (1412) interface wherein a currently selected radio signal coverage map may be presented for a currently received signal.

Such GUI shows a radio signal coverage map's reference point (1431), current mobile device's position (1432) and at least one location (1435-1438) where signal's parameters are better than in the current location - Fig. 14B. Such locations (1435-1438) may be indicated with different graphical objects, the appearance of which depends on the measured signal quality and/or strength.

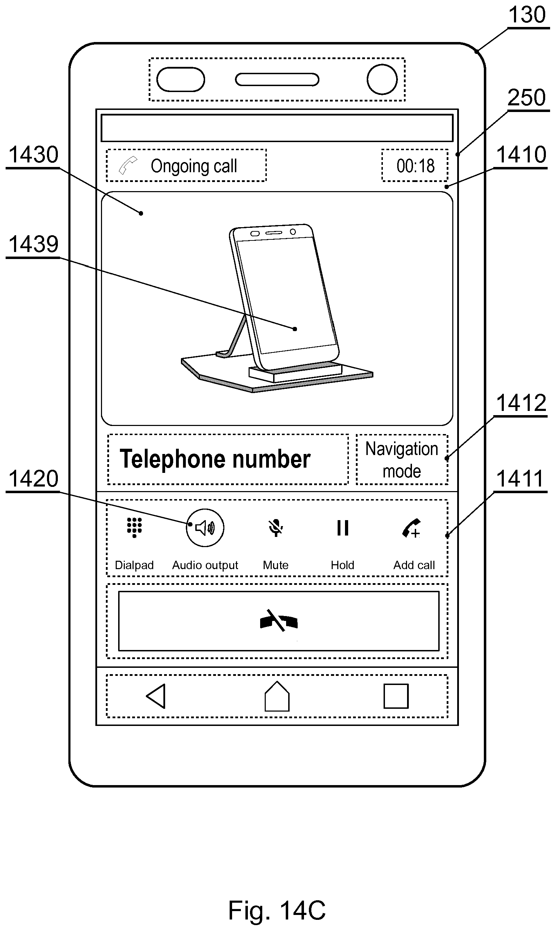

Fig. 14C presents further cues for a user. For example, the system may display that a user needs to uncover the front and back side of the mobile device, for example placing it in a docking station (1439). Other cues, indicating a desired orientation and proximity state of the mobile device, may be presented visibly on the screen (e.g. textual cues) or an audible signal may be provided, by the mobile device, in order to indicate when preferred orientation and proximity state has been achieved.

The present invention allows to communicate, using mobile device(s), taking advantage of the best available signal in a vicinity of a given area. Therefore, the invention provides a useful, concrete and tangible result.

Further, parameters from different sensors are processed and stored in order to facilitate a use of the best signal. Thus, the machine or transformation test is fulfilled and that the idea is not abstract.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for signal coverage mapping may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for radio signal coverage mapping, the method comprising the steps of
• determining geolocation (1000a) of a mobile device (130, 131, 132, 133) receiving a radio signal;
• determining proximity (1000b) of the mobile device to other objects;
• determining orientation (1000c) of the mobile device in 3D space;
• determining (1000d) the radio signal's reception parameters;
• storing (1000e) at least two records comprising the gathered information on geolocation and proximity and orientation and the radio signal reception parameters (1000a-1000d) wherein at least one of the geolocation, proximity, orientation (1000a-1000c) differs between the two records;
• receiving, by the mobile device, a communication request (1000f), the communication using the radio signal, at a location determined by the first record;
• determining (1000g) whether signal reception parameters result in an improved quality of service at the second location, defined by the second record, than at the location determined by the first record; and
• navigating (1000h), by the mobile device, a user of the mobile device to the second location and informing when the current parameters of geolocation and proximity and orientation, of the mobile device, match the parameters stored in the second record,
the method being **characterized in that** said determining proximity (1000b) includes proximity to other devices by the mobile device's front and/or back side.

2. The method according to claim 1 wherein said storing (1000e) at least two records is executed when the mobile device is present in a limited the area of signal monitoring, the area being limited by specifying a location's perimeter definition (610) from a given reference point.

3. The method according to claim 1 wherein said signal reception parameters comprise signal strength and quality of service (QoS) parameters (522).

4. The method according to claim 4 wherein said signal reception parameters comprise measurement accuracy (642).

5. The method according to claim 1 wherein determining geolocation (1000a) is executed using a geolocation system combined with inertial navigation.

6. The method according to claim 1 wherein said determining geolocation (1000a) of a mobile device takes into account altitude.

7. The method according to claim 6 wherein a threshold is applied with respect to the altitude difference that denotes a need to create a different radio coverage map.

8. The method according to claim 1 wherein said radio signal is selected from a group comprising GPS, FM, Wi-Fi, GSM, UMTS, LTE.

9. The method according to claim 1 wherein said at least two records form a radio signal coverage map (661) associated with a unique identifier of the mobile device (703) or a make and model of the mobile device.

10. The method according to claim 9 wherein said radio signal coverage map (661) is transmitted, by the mobile device, to a central repository of radio signal coverage maps, from which other devices may download the maps.

11. The method according to claim 9 wherein said radio signal coverage map (661) comprises information on average signal strength, in the area of the map (705) and /or average quality of service.

12. A computer program comprising program code means for performing all the steps of the computer-implemented method according to claim 1 when said program is run on a computer.

13. A computer readable medium storing computer-executable instructions performing all the steps of the computer-implemented method according to claim 1 when executed on a computer.

14. A system for radio signal coverage mapping in a mobile device (130, 131, 132, 133), the system comprising:
• a connectivity module configured to receive a radio signal;
• a geolocation unit;
• an orientation detection unit;
• a proximity detection sensor;
• a processor configured to execute all steps of the method according to claim 1.

## Patentansprüche

1. Verfahren zur Darstellung der Funksignalabdeckung, wobei das Verfahren die folgenden Schritte umfasst:
• Bestimmen der Geolokation (1000a) einer mobilen Vorrichtung (130, 131, 132, 133), die ein Funksignal empfängt;
• Bestimmen der Nähe (1000b) der mobilen Vorrichtung zu anderen Objekten;
• Bestimmen der Ausrichtung (1000c) der mobilen Vorrichtung in 3D-Raum;
• Bestimmen (1000d) der Empfangsparameter des Funksignals;
• Speichern (1000e) von zumindest zwei Aufzeichnungen, die die gesammelten Informationen zu Geolokation und Nähe und Ausrichtung und die Funksignalempfangsparameter (1000a-1000d) umfassen, wobei sich zumindest eines von der Geolokation, Nähe, Ausrichtung (1000a-1000c) zwischen den zwei Aufzeichnungen unterscheidet;
• Empfangen, durch die mobile Vorrichtung, einer Kommunikationsaufforderung (1000f), wobei die Kommunikation das Funksignal verwendet, an einer durch die erste Aufzeichnung bestimmten Lokation;
• Bestimmen (1000g), ob Signalempfangsparameter zu einer verbesserten Servicequalität an der zweiten Lokation führen, definiert durch die zweite Aufzeichnung, als an der durch die erste Aufzeichnung bestimmten Lokation; und
• Navigieren (1000h), durch die mobile Vorrichtung, eines Benutzers der mobilen Vorrichtung zu der zweiten Lokation und Informieren, wenn die aktuellen Parameter von Geolokation und Nähe und Ausrichtung der mobilen Vorrichtung mit den Parametern übereinstimmen, die in der zweiten Aufzeichnung gespeichert sind,
wobei das Verfahren **dadurch gekennzeichnet ist, dass** das Bestimmen der Nähe (1000b) Nähe zu anderen Vorrichtungen durch die Vorder- und/oder Rückseite der mobilen Vorrichtung beinhaltet.

2. Verfahren nach Anspruch 1, wobei das Speichern (1000e) von zumindest zwei Aufzeichnungen ausgeführt wird, wenn die mobile Vorrichtung in einem begrenzten Bereich der Signalüberwachung vorhanden ist, wobei der Bereich begrenzt wird, indem eine Umkreisdefinition (610) einer Lokation von einem gegebenen Referenzpunkt spezifiziert wird.

3. Verfahren nach Anspruch 1, wobei die Signalempfangsparameter Parameter (522) der Signalstärke und Servicequalität (QoS) umfassen.

4. Verfahren nach Anspruch 4, wobei die Signalempfangsparameter Messgenauigkeit (642) umfassen.

5. Verfahren nach Anspruch 1, wobei das Bestimmen der Geolokation (1000a) unter Verwendung eines Geolokationssystems kombiniert mit inertialer Navigation ausgeführt wird.

6. Verfahren nach Anspruch 1, wobei das Bestimmen der Geolokation (1000a) einer mobilen Vorrichtung Höhe berücksichtigt.

7. Verfahren nach Anspruch 6, wobei eine Schwelle in Bezug auf den Höhenunterschied angewandt wird, die einen Bedarf anzeigt, eine andere Funkabdeckungskarte zu erstellen.

8. Verfahren nach Anspruch 1, wobei das Funksignal aus einer Gruppe ausgewählt ist, die GPS, FM, Wi-Fi, GSM, UMTS, LTE umfasst.

9. Verfahren nach Anspruch 1, wobei die zumindest zwei Aufzeichnungen eine Funksignalabdeckungskarte (661) im Zusammenhang mit einer einmaligen Kennung der mobilen Vorrichtung (703) oder einer Bauart und eines Modells der mobilen Vorrichtung bilden.

10. Verfahren nach Anspruch 9, wobei die Funksignalabdeckungskarte (661) durch die mobile Vorrichtung an einen zentralen Speicher von Funksignalabdeckungskarten übertragen wird, aus dem andere Vorrichtungen die Karten herunterladen können.

11. Verfahren nach Anspruch 9, wobei die Funksignalabdeckungskarte (661) Informationen über durchschnittliche Signalstärke in dem Bereich der Karte (705) und/oder durchschnittliche Servicequalität umfasst.

12. Computerprogramm, umfassend Programmcodemittel zum Durchführen aller Schritte des computerimplementierten Verfahrens nach Anspruch 1, wenn das Programm auf einem Computer läuft.

13. Computerlesbares Medium, das computerausführbare Anweisungen speichert, die alle Schritte des computerimplementierten Verfahrens nach Anspruch 1 ausführen, wenn sie auf einem Computer ausgeführt werden.

14. System zur Darstellung der Funksignalabdeckung in einer mobilen Vorrichtung (130, 131, 132, 133), wobei das System Folgendes umfasst:
• ein Konnektivitätsmodul, das konfiguriert ist, um ein Funksignal zu empfangen;
• eine Geolokationseinheit;
• eine Ausrichtungserfassungseinheit;
• einen Näherungserfassungssensor;
• einen Prozessor, der konfiguriert ist, um alle Schritte des Verfahrens nach Anspruch 1 auszuführen.

## Revendications

1. Procédé de cartographie de couverture de signal radio, le procédé comprenant les étapes consistant à
• déterminer la géolocalisation (1000a) d'un appareil mobile (130, 131, 132, 133) recevant un signal radio ;
• déterminer la proximité (1000b) de l'appareil mobile avec les autres objets ;
• déterminer l'orientation (1000c) de l'appareil mobile dans un espace 3D ;
• déterminer (1000d) les paramètres de réception du signal radio ;
• stocker (1000e) au moins deux enregistrements comprenant les informations recueillies sur la géolocalisation, la proximité et l'orientation et les paramètres de réception du signal radio (1000a-1000d) dans lesquels au moins l'un - parmi la géolocalisation, la proximité, l'orientation (1000a-1000c) - diffère entre les deux enregistrements ;
• recevoir, par l'appareil mobile, une demande de communication (1000f), la communication utilisant le signal radio, à un emplacement déterminé par le premier enregistrement ;
• déterminer (1000g) si les paramètres de réception du signal entraînent une meilleure qualité du service au second emplacement, défini par le second enregistrement, qu'à l'emplacement déterminé par le premier enregistrement ; et
• naviguer (1000h), par l'appareil mobile, d'un utilisateur de l'appareil mobile vers le second emplacement et informer lorsque les paramètres actuels de géolocalisation, de proximité et d'orientation de l'appareil mobile correspondent aux paramètres stockés dans le second enregistrement,
le procédé étant **caractérisé en ce que** ladite proximité de détermination (1000b) comprend la proximité d'autres appareils par le ou les côtés avant et/ou arrière de l'appareil mobile.

2. Procédé selon la revendication 1 dans lequel ledit stockage (1000e) d'au moins deux enregistrements est exécuté lorsque l'appareil mobile est présent dans une zone limitée de surveillance du signal, la zone étant limitée en spécifiant la définition de périmètre d'un emplacement (610) à partir d'un point de référence donné.

3. Procédé selon la revendication 1 dans lequel lesdits paramètres de réception du signal comprennent des paramètres de force du signal et de qualité de service (QoS) (522).

4. Procédé selon la revendication 4, dans lequel lesdits paramètres de réception du signal comprennent une précision de mesure (642).

5. Procédé selon la revendication 1, dans lequel la détermination de la géolocalisation (1000a) est exécutée en utilisant un système de géolocalisation combiné à une navigation par inertie.

6. Procédé selon la revendication 1, dans lequel la détermination de la géolocalisation (1000a) d'un appareil mobile prend en compte l'attitude.

7. Procédé selon la revendication 6, dans lequel un seuil est appliqué par rapport à la différence d'altitude qui indique la nécessité de créer une carte de couverture radio différente.

8. Procédé selon la revendication 1, dans lequel ledit signal radio est sélectionné parmi un groupe comprenant GPS, FM, Wi-Fi, GSM, UMTS, LTE.

9. Procédé selon la revendication 1, dans lequel deux enregistrements minimum parmi lesdits enregistrements forment une carte de couverture de signal radio (661) associée à un identifiant unique de l'appareil mobile (703) ou une marque et un modèle de l'appareil mobile.

10. Procédé selon la revendication 9, dans lequel ladite carte de couverture de signal radio (661) est transmise, par l'appareil mobile, à un répertoire central de cartes de couverture de signal radio, à partir duquel d'autres appareils peuvent télécharger les cartes.

11. Procédé selon la revendication 9, dans lequel ladite carte de couverture de signal radio (661) comprend des informations sur la force moyenne du signal, dans la zone de la carte (705) et/ou la qualité de service moyenne.

12. Programme d'ordinateur comprenant un moyen de code de programme visant à exécuter toutes les étapes du procédé mis en oeuvre par ordinateur selon la revendication 1 lorsque ledit programme est exécuté sur un ordinateur.

13. Support lisible par ordinateur stockant des instructions exécutables par ordinateur effectuant toutes les étapes du procédé mis en oeuvre par ordinateur selon la revendication 1 lorsqu'il est exécuté sur un ordinateur.

14. Système de cartographie de couverture de signal radio dans un appareil mobile (130, 131, 132, 133), le système comprenant :
• un module de connectivité configuré pour recevoir un signal radio ;
• une unité de géolocalisation ;
• une unité de détection d'orientation ;
• un capteur de détection de proximité ;
• un processeur configuré pour exécuter toutes les étapes du procédé selon la revendication 1.
